# EUROPÄISCHE PATENTANMELDUNG

(11) **EP 3 501 778 A1**
(43) Veröffentlichungstag der Anmeldung: **26.06.2019**
(21) Anmeldenummer: 17208618.3
(22) Anmeldetag: 19.12.2017
(51) Int. Cl.: B29C 43/02, B29C 43/38, B29C 43/18, B29C 33/12, B29D 23/20

(54) **VERFAHREN SOWIE VORRICHTUNG ZUM HERSTELLEN VON VERPACKUNGSTUBEN**

(71) Anmelder: PackSys Global AG, 8630 Rüti ZH (CH)
(72) Erfinder: HOMBERGER, Daniel, 8344 Bäretswil (CH)
(74) Vertreter: Patentanwälte Behrmann Wagner PartG mbB

(57) **Zusammenfassung**

Die Erfindung betrifft ein Verfahren zum Herstellen von Verpackungstuben bei dem mit einer eine Matrize (3) sowie eine einen Dorn (5) und eine den Dorn (5) umgebende Hülse (6) aufweisenden Dorneinheit (4) umfassenden Pressform (2) durch Pressen einer plastifizierten, thermoplastischen, bevorzugt extrudierten, Kunststoffportion (8) zwischen der Matrize (3) und der Dorneinheit (4) ein Tubenkopf (15) geformt und mit einem am Außenumfang der Hülse (6) angeordneten Tubenrohr (7) verbunden wird, wobei während des Pressens der Dorn (5) und die Matrize (3) entlang einer Pressachse (A) aufeinander zu verstellt und dadurch die Kunststoffportion (8) mit Druck beaufschlagt wird, wobei die Hülse (6) durch die Druckbeaufschlagung der Kunststoffportion (8) vor Beendigung des Pressvorgangs axial entlang der Pressachse (A) entgegen einer Gegenkraft relativ zu der Matrize (3) von dieser weg sowie relativ zum Dorn (5) in eine feste End-Relativposition zum Dorn (5) verstellt wird.

## Beschreibung

Die Erfindung betrifft ein Verfahren gemäß dem Oberbegriff des Anspruchs 1 zum Herstellen von Verpackungstuben bei welchem mit einer eine Matrize sowie einer einen Dorn und eine den Dorn umgebende Hülse aufweisenden Dorneinheit umfassenden Pressform durch Pressen einer plastifizierten (d.h. erhitzten und damit erweichten), thermoplastischen, bevorzugt extrudieren, Kunststoffportion zwischen der (wannenartigen) Matrize und der Dorneinheit ein Tubenkopf geformt und mit einem am Außenumfang der Hülse angeordneten, bevorzugt in Richtung Matrize über die Hülse, d.h. über deren Außenumfang axial in Richtung Matrize vorstehenden, Tubenrohr verbunden wird, wobei während des Pressens der Dorn und die Matrize entlang einer Pressachse aufeinander zu verstellt und dadurch die Kunststoffportion mit Druck beaufschlagt wird. Bei dem Tubenrohr handelt es sich bevorzugt um ein zumindest größten Teils aus Kunststoff bestehendes Tubenrohr, umfassend oder bestehend aus zumindest einer Schicht aus thermoplastischen Kunststoff. Bei dem Tubenrohr kann es sich um ein extrudiertes Tubenrohr oder um ein bevorzugt längsgeschweißtes Tubenrohr, insbesondere aus einem mindestens eine Barriereschicht umfassenden Laminat mit mindestens einer thermoplastischen Kunststoffschicht handeln. Bei einem längsverschweißten Tubenrohr können die Längsränder des Tubenrohrsubstrates, insbesondere des Laminats, auf Stoß oder überlappend angeordnet sein und/oder unmittelbar miteinander verschweißt sein oder über eine plastifizierte Kunststoffschnur und/oder mittelbar über einen mit beiden Längsrändern verschweißten Kunststoffstreifen. Bei der zuletzt genannten Lösung kann zwischen den Längsrändern auch ein Längsspalt verbleiben, der von dem Kunststoffstreifen geschlossen ist.

Ferner betrifft die Erfindung eine Vorrichtung gemäß dem Oberbegriff des Anspruchs 11 zum Herstellen von Verpackungstuben, insbesondere im Rahmen eines erfindungsgemäßen Verfahrens, mit einer eine (wannenartige) Matrize sowie einer einen Dorn und eine den Dorn umgebende Hülse aufweisenden Dorneinheit umfassenden Pressform zum Formen einer plastifizierten, thermoplastischen, bevorzugt extrudierten, Kunststoffportion zwischen der Matrize und der Dorneinheit zu einem Tubenkopf und zum Verbinden des Tubenkopfes mit einem am Außenumfang der Hülse anordenbaren Tubenrohr, wobei der Dorn und die Matrize derart angeordnet sind, dass diese während des Pressens bzw. zum Pressen der Kunststoffportion mittels Antriebsmitteln entlang einer Pressachse aufeinander zu verstellbar und dadurch die Kunststoffportion mit Druck beaufschlagbar ist.

Aus der DE 30 23 415 C3 sind ein Verfahren und eine Vorrichtung zum Herstellen von Kunststoffverpackungstuben bekannt. Gemäß dem bekannten Verfahren wird eine ringförmige Portion aus plastifiziertem Kunststoff extrudiert und in eine Matrize einer Pressform abgelegt, woraufhin ein Tubenkopf geformt wird durch axiales Verstellen eines Dorns in die Matrize entlang einer Pressachse. Unmittelbar am Außenumfang des Dorns sitzt ein Tubenrohr, welches während des Pressvorgangs mit dem Tubenkopf verbunden wird. Nachteilig bei dem bekannten Verfahren und der bekannten Vorrichtung ist, dass durch das Pressen der Kunststoffportion plastifizierter Kunststoff in einen Bereich zwischen Dorn und Tubenrohr einströmen kann, da das Kunststoffmaterial bereits nach anfänglicher Druckbeaufschlagung mit dem Dorn anfängt sich zu verteilen, bevor das Tubenrohr zwischen Dorn und Matrize geklemmt und damit abgedichtet wurde. Ein weiterer Nachteil der bekannten Lösung besteht darin, dass zumindest teilweise schon erkaltetes Kunststoffmaterial, welches bereits in Kontakt war mit dem Innenumfang des Tubenrohres aufgrund der Pressbewegung des Dorns axial wieder in Richtung Matrize verschoben wird. Dies führt zur haptisch unvorteilhaften Tuben. Teilweise, insbesondere bei transparenten oder weißen Tuben, sind die sich im Tubeninneren ergebenden Unregelmäßigkeiten von außen sichtbar, meist bei farbiger Füllung.

Aus der DE 88 01 851 U sind ein Verfahren und eine Vorrichtung zur Herstellung von Kunststofftuben bekannt, wobei bei dem beschriebenen Verfahren das Tubenrohr nicht unmittelbar am Außenumfang des Dorns aufsitzt, sondern an einer den Dorn umschließenden Hülse. Zum Formen bzw. Pressen des Tubenkopfes wird der Dorn zunächst zusammen mit der Hülse axial in eine Matrize verstellt, bis die Hülse einen axial überstehenden Abschnitt des Tubenrohrs gegen die Matrize verstellt und somit klemmt. In der Praxis wird die Hülse in dieser das Tubenrohr klemmenden Position mechanisch relativ zur Matrize verriegelt, woraufhin dann ausschließlich der in dem Dokument als Pressstempel bezeichnete Dorn innerhalb der Hülse unter Ausübung eines Pressdrucks relativ zu der ortsfesten Hülse in die Matrize abgesenkt wird. Der Weg, den der Dorn dabei noch bis zum Erreichen eines Endpressdrucks relativ zu der dann ortsfesten Hülse zurücklegt ist abhängig von der im Rahmen üblicher Toleranzen schwankenden Größe der Kunststoffportion, was wiederum zu Schwankungen im Konturverlauf der Tubenkopfinnenkontur im Übergangsbereich zwischen dem von der Hülse geformten radial äußeren Tubenkopfabschnitt und dem radial innen daran angrenzenden, von dem Dorn geformten, radial inneren Tubenkopfabschnitt führt.

Ausgehend von dem vorgenannten Stand der Technik liegt der Erfindung die Aufgabe zugrunde, ein verbessertes Tubenherstellungsverfahren sowie eine verbesserte Tubenherstellungsvorrichtung anzugeben, mit welcher gleichmäßigere Tubenkopfinnenkonturen produzierbar sind.

Diese Aufgabe wird hinsichtlich des Verfahrens mit den Merkmalen des Anspruchs 1 gelöst, d.h. bei einem gattungsgemäßen Verfahren dadurch, dass die Hülse nicht wie im Stand der Technik bei Erreichen einer gegen die Matrize ausgefahrenen Position relativ zur Matrize verriegelt wird, sondern durch die Druckbeaufschlagung der Kunststoffportion vor Beendigung des Pressvorgangs axial entlang der Pressachse entgegen einer Gegenkraft relativ zu der Matrize von dieser weg sowie relativ zum Dorn und dabei in eine zweite feste (definierte) End-Relativposition zum Dorn verstellt wird. Um diese Verstellung der Hülse zu bewirken, muss, wie erwähnt, die Kunststoffportion durch die Relativbewegung von Matrize und Dorn druckbeaufschlagt werden, um wiederum die zum Verstellen der Hülse notwendige, der Gegenkraft entgegengesetzte Verstell- bzw. Druckkraft auf die Hülse aufzubringen - Dorn und Matrize bewegen sich also während der Verstellbewegung der Hülse von der Matrize weg weiter aufeinander zu, wobei die Bewegung der Hülse von der Matrize weg - unabhängig von der Kunststoffportionsmenge in der festen End-Relativposition endet. Die End-Relativposition ist fest, d.h. definiert und somit von Pressvorgang zu Pressvorgang gleich, um somit eine vom Pressvorgang zu Pressvorgang - unabhängig von toleranzbedingten Kunststoffportionsmengenschwankungen - gleiche Tubenkopfinnenkontur zu erhalten.

Hinsichtlich der Vorrichtung wird die Aufgabe mit den Merkmalen des Anspruchs 12 gelöst, d.h. bei einer gattungsgemäßen Vorrichtung dadurch, dass die Hülse mithilfe von Kraftbeaufschlagungsmitteln mit einer Gegenkraft entlang der Pressachse in Richtung der Matrize beaufschlagbar ist, und dass die Gegenkraft so dimensioniert ist, dass die Hülse durch die Druckbeaufschlagung der Kunststoffportion vor Beendigung des Pressvorgangs axial entlang der Pressachse entgegen der Gegenkraft relativ zu der Matrize von dieser weg sowie relativ zum Dorn und dabei in eine feste End-Relativposition zum Dorn verstellbar ist.

Weitere Vorteile der Erfindung sind in den Unteransprüchen angegeben.

In den Rahmen der Erfindung fallen sämtliche Kombinationen aus zumindest zwei von der in der Beschreibung, den Ansprüchen und/oder den Figuren offenbarten Merkmalen.

Zur Vermeidung von Wiederholungen sollen verfahrensgemäß offenbarten Merkmale (durch das Vorsehen entsprechender Funktionsmittel) auch als vorrichtungsgemäß offenbart gelten und beanspruchbar sein. Ebenso sollen vorrichtungsgemäß offenbarte Merkmale auch als verfahrensgemäß offenbart gelten und beanspruchbar sein.

Der Erfindung liegt der Gedanke zugrunde, die Hülse mit einer definierten Kraft (Gegenkraft) entlang der Pressachse in Richtung Matrize zu beaufschlagen, wobei die Gegenkraft so gewählt ist bzw. wird, dass diese noch vor Beendigung des Pressvorgangs durch die Druckbeaufschlagung der Kunststoffportion überwindbar ist, dass also von der Kunststoffportion eine die Gegenkraft betragsmäßig übersteigende und der Gegenkraft entgegengerichtete Kraft auf die Hülse übertragen wird, sodass die Hülse entgegen der Gegenkraft axial von der Matrize wegverstellt wird und sich dabei relativ zum Dorn in eine feste, d.h. definierte End-Relativposition zum Dorn bewegt und dabei einen Raum bzw. Pressformbereich axial entlang der Pressachse zwischen der Hülse und der Matrize sowie radial zwischen dem Tubenrohr und dem Dorn freigibt, der durch die Druckbeaufschlagung der Kunststoffportion vor Beendigung des Pressvorgangs mit plastifiziertem Kunststoff der Kunststoffportion gefüllt wird. Eine typische Größe für die Grenzkraft, ab deren Überschreiten die Hülse axial von der Matrize in Richtung ihrer freien End-Relativposition zum Dorn bewegt wird, bei der Herstellung einer Tube mit einem 35mm Außendurchmesser des Tubenrohrs beträgt beispielsweise etwa 800N.

Die Grenzkraft ist bevorzugt so gewählt, dass die relative Verstellbewegung der Hülse axial von der Matrize weg erst dann beginnt, wenn die plastifizierte Kunststoffportion vollständig das Volumen des Halses ausgefüllt hat, bevorzugt bis zu einem endseitigen Halsloch und insbesondere auch ein Volumen eines bevorzugt am Hals vorgesehenen Gewindes zum Aufschrauben eines Tubenverschlussdeckels.

Anders ausgedrückt werden Hülse und Matrize, bevorzugt durch entweder aktives Antreiben der Matrize zu der dann bevorzugt ortsfesten Hülse oder aktives Antreiben der Hülse (bevorzugt gemeinsam mit dem von der Hülse umschlossenen Dorn) relativ zu der dann bevorzugt ortsfesten Matrize aufeinander zuverstellt, bis das bevorzugt in Richtung der Matrize entlang der Pressachse über den Außenumfang der Hülse in Richtung Matrize vorstehende Tubenrohr zwischen Hülse und Matrize geklemmt und somit eine Weiterbewegung von Hülse und Matrize aufeinander zu blockiert wird. Durch das darauffolgende Relativverstellen von Dorn und Matrize aufeinander zu (bevorzugt durch entweder aktives Antreiben der Matrize auf den vorzugsweise ortsfesten Dorn zu oder durch aktives Antreiben des Dorns in auf die vorzugsweise ortsfeste Matrize zu) wird auf die plastifizierte, thermoplastische, bevorzugt extrudierte Kunststoffportion Druck ausgeübt, der dafür Sorge trägt, dass sich die Kunststoffportion in der Pressform verteilt, auch nach radial außen in einen Bereich axial zwischen Hülse und Matrize hinein, wobei der auf die Hülse wirkende Druck steigt, bis die auf die Hülse wirkende und die Hülse in Richtung Matrize kraftbeaufschlagende Gegenkraft überschritten und dadurch die Hülse entlang der Pressachse von der Matrize wegverstellt wird in eine feste End-Relativposition zum Dorn.

Da sich die Hülse bei dem erfindungsgemäßen Verfahren und der erfindungsgemäßen Vorrichtung somit am Ende des Pressvorgangs in einer definierten, nämlich der festen End-Relativposition zum Dorn befindet, ist der Konturverlauf auf der Innenseite des Tubenkopfes von radial außen nach radial innen, insbesondere in einem Übergangsbereich zwischen einem radial äußeren, von der Hülse geformten ringförmigen Tubenkopfabschnitt und dem dazu radial innen angrenzenden, von dem Dorn geformten Tubenkopfabschnitt immer gleich, unabhängig von der im Rahmen üblicher Toleranzen schwankenden Größe der Kunststoffportion - die Größe der Kunststoffportion hat bei dem erfindungsgemäßen Verfahren und der erfindungsgemäßen Vorrichtung lediglich Einfluss auf die axiale (entlang der Pressachse) gemessene Materialstärke des Tubenkopfes, nicht mehr jedoch auf den Innenkonturverlauf des Tubenkopfes von radial außen nach radial innen, da der Übergang, insbesondere eine Stufe oder ein stetiger, beispielsweise geradliniger Übergang, von Hülse zu Dorn von Pressvorgang zu Pressvorgang gleich ist bzw. bleibt. Bevorzugt ist es, Hülse und Matrize so aufeinander abzustimmen, dass bewusst ein Einlassspalt axial zwischen Hülse und Matrize freigelassen wird, über den ein bewusstes Einströmen von plastifiziertem Kunststoff von radial innen nach radial außen ermöglicht wird, um die der Gegenkraft entgegengerichtete Druck- bzw. Verstellkraft zur Überwindung der Gegenkraft auf die Hülse aufzubringen und diese dann sowohl relativ von der Matrize, nämlich entgegen der Pressrichtung, d.h. von der Matrize weg und gleichzeitig relativ zu dem Dorn in die End-Relativposition zu verstellen.

Besonders bevorzugt ist es, wenn die Hülse sich zu dem Zeitpunkt, an dem das Tubenrohr zwischen Hülse und Matrize geklemmt und dadurch eine Weiterbewegung von Hülse und Matrize aufeinander zu unterbunden wird in einer festen Start-Relativposition zum Dorn befindet, ausgehend von der sich Dorn und Matrize dann weiter annähern, um die Kunststoffportion Druckkraft zu beaufschlagen. Hierdurch verteilt sich dann die Kunststoffportion in der Pressform und gelangt dann schlussendlich axial in einen Bereich zwischen Hülse und Matrize, um die Hülse kraftzubeaufschlagen und axial von der Matrize wegzuverstellen in die feste End-Relativposition hinein, in der diese Wegbewegung der Hülse von der Matrize, insbesondere über einen festen Anschlag, unterbunden wird. Bevorzugt ist vorgesehen, dass, wie später noch erläutert werden wird, ab diesem Moment die Dorneinheit bestehend aus Hülse und Dorn bei gleichbleibender Relativanordnung in der Grund-Relativposition gemeinsam sich der Matrize nähern, entweder durch aktives Verstellen (Antreiben) der Matrize oder, bevorzugt alternativ, der Dorneinheit. Besonders bevorzugt ist es, wenn die Kunststoffportionsmenge derart auf die Pressformgeometrie abgestimmt ist, dass vor dem Zeitpunkt, an dem das Kunststoffrohr zwischen Hülse und Matrize geklemmt und damit eine Weiteraufeinanderzubewegung von Hülse und Matrize unterbunden wird, entweder die Kunststoffportion noch nicht zwischen Matrize und Dorn gepresst, d.h. in der Pressform verteilt wird oder zumindest noch nicht so stark bzw. weit, dass jedenfalls kein Kunststoffmaterial in einen Bereich axial zwischen Hülse und Matrize gelangt, um somit ein Einströmen von Kunststoffmaterial in noch nicht abgedichtete Bereiche zu verhindern.

Wie erwähnt ist es alternativ möglich, die Matrize während des Pressvorgangs aktiv auf den dann bevorzugt feststellenden Dorn anzutreiben oder den Dorn aktiv relativ zu der dann bevorzugt festsehenden Matrize anzutreiben. Bei der letztgenannten Ausführungsform ist es bevorzugt, wenn die Antriebsmittel zum aktiven Verstellen des Dorns entlang der Pressachse in Richtung der dann bevorzugt feststehenden Matrize ein gemeinsamer Antrieb für den Dorn und die Hülse, d.h. ein Antrieb der Dorneinheit ist, mit welchem ab Erreichen der festen End-Relativposition der Hülse relativ zum Dorn die gesamte Dorneinheit, d.h. sowohl Dorn als auch Hülse mit dem Antrieb weiter in Richtung Matrize verstellt werden. Anders ausgedrückt wird bei einer derartigen, bevorzugten Ausführungsform die Hülse ab Erreichen der festen End-Relativposition zum Dorn vom angetriebenen Dorn axial in Richtung Matrize mitgenommen. Insbesondere eine derartige Ausführungsform ermöglicht ein Nachrüsten bestehender Vorrichtungen mit einer neuen Dorneinheit, bei der die Hülse zwischen einer festen Start-Relativposition und der festen End-Relativposition relativ zum Dorn verstellbar ist und zwar entgegen der erwähnten, die Hülse in Richtung Matrize beaufschlagenden Gegenkraft, die erfindungsgemäß durch Kraftbeaufschlagen der Hülse über die Kunststoffportion überwunden wird. Ein Nachrüsten bestehender Vorrichtungen zur Tubenproduktion mit einer erfindungsgemäßen Dorneinheit, bei der die Hülse von der Matrize weg sowie relativ zum Dorn in eine feste End-Relativposition verstellbar ist, ist auch bei einer aktiv angetriebenen Matrize möglich - in diesem Fall sind der erfindungsgemäß ausgestalteten Dorneinheit dann ggf. keine Antriebsmittel zum aktiven gemeinsamen Verstellen der Dorneinheit, d.h. der Hülse und dem Dorn entlang der Pressachse in die Matrize hinein zugeordnet - diese Relativverstellbewegung von Matrize und Dorneinheit aufeinander zu wird dann von den der Matrize zugeordneten Antriebsmitteln übernommen.

Bevorzugt umfasst die Pressform in an sich bekannter Weise einen Lochstempel, der für ein Freihalten eines Auslasses des Tubenkopfes in an sich bekannter Weise Sorge trägt.

Darüber hinaus ist es bevorzugt, wenn der Hülse, bevorzugt radial außerhalb der Hülse angeordnete und zusammen mit dieser entlang der Pressachse verstellbare Bremsmittel zugeordnet sind, um das Tubenrohr definiert am Außenumfang der Hülse zu fixieren und/oder eine bewusste Bewegung des Tubenrohres zuzulassen. Bevorzugt sind die Bremsmittel derart ausgebildet, dass diese das Tubenrohr beim Pressvorgang gegen den Außenumfang der Hülse kraftbeaufschlagen. Die Bremsmittel sind lösbar, um nach dem Entformen die Kombination aus Tubenkopf und Tubenrohr von der Dorneinheit entnehmen bzw. entfernen zu können.

Besonders bevorzugt ist es, die Bremsmittel vor Beginn des Entformungsvorgangs, insbesondere kurz, zu lösen und dann wieder zu betätigen, um während der Lösezeit Zug- oder Druckspannungen im Tubenrohr abzubauen. Bevorzugt pressen die Bremsmittel dann wieder das Tubenrohr gegen die Hülse während des eigentlichen Entformungsvorgangs, bei welchem Dorneinheit und Matrize entlang der Pressachse voneinander weg verstellt werden.

Durch das axiale Verstellen der Hülse von der Matrize weg in die feste Relativposition wird ein zuvor von der Hülse belegter bzw. ausgefüllter Pressformabschnitt frei, welcher radial außen von einem zuvor von der Hülse verdeckten Innenumfangswandabschnitt des Tubenrohres und bevorzugt radial innen vom Dorn begrenzt ist. Bevorzugt ist die Dimension (Materialstärke) der Hülse sowie der maximale Verstellweg der Hülse von der Matrize weg bis zum Erreichen der festen End-Relativposition relativ zum Dorn so gewählt, dass der Pressformabschnitt zwischen 0,4Gew.-% und 30Gew.-%, bevorzugt zwischen 0,8Gew.-% und 25Gew.-%, noch weiter bevorzugt zwischen 1,2Gew.-% und 20Gew.-%, ganz besonders bevorzugt zwischen 1,5Gew.-% und 15Gew.-% der Gesamtmasse der Kunststoffportion aufnimmt.

Besonders zweckmäßig ist es, wenn die axiale Verstellstrecke, die die Hülse entlang der Pressachse von der Matrize weg bis zum Erreichen der festen End-Relativposition verstellt wird aus einem Wertebereich zwischen 0,5mm und 8mm, bevorzugt zwischen 1,5mm und 6mm, noch weiter bevorzugt zwischen 2mm und 5mm gewählt ist.

Wie bereits erwähnt ist es bevorzugt, wenn die Hülse zum Zeitpunkt des Klemmens des Tubenrohrs zwischen Hülse und Matrize, d.h. zum Zeitpunkt des mittelbaren Anschlagens des Hülse über das Tubenrohr an der Matrize in einer festen Start-Relativposition zum Dorn angeordnet ist.

Da sich Dorn und Matrize nach diesem mittelbaren Anschlagen weiter aufeinander zu bewegen verändert sich ausgehend von der Start-Relativposition zum Dorn die Relativposition zwischen Hülse und Dorn unmittelbar, wobei die weitere Aufeinanderzubewegung von Dorn und Matrize dann überlagert wird von der Verstellbewegung der Hülse von der Matrize weg bis zum Erreichen der End-Relativposition, verursacht durch die weitere Druckbeaufschlagung der Kunststoffportion zwischen Dorn und Matrize und dadurch Kraftbeaufschlagen der Hülse entlang der Pressachse von der Matrize weg. Bevorzugt ist eine Ausführungsform, bei der die Hülse in ihrer Start-Relativposition zum Dorn, den Dorn, genauer den Außenumfang des Dorns axial entlang der Pressachse, insbesondere in Richtung Matrize, überragt.

Bevorzugt wird die End-Relativposition der Hülse zum Dorn, die die axiale Verstellbewegung der Hülse von der Matrize durch Druckbeaufschlagung der Kunststoffportion begrenzt von einem Anschlag definiert, wobei der Anschlag bevorzugt ortsfest relativ zu dem Dorn angeordnet ist und bevorzugt, jedoch nicht zwingend, wie später noch erläutert werden wird, gemeinsam mit der Dorneinheit relativ zur Matrize antreibbar ist. Zusätzlich oder alternativ ist es bevorzugt, wenn die vorerwähnte Start-Relativposition, in der sich die Hülse zum Zeitpunkt des Klemmens des Tubenrohres zwischen Hülse und Matrize bevorzugt befindet ebenfalls durch einen Anschlag begrenzt ist, welcher bevorzugt entlang der Pressachse von dem Anschlag für die zweite End-Relativposition entlang der Pressachse in Richtung Matrize beabstandet ist.

Bevorzugt ist eine Ausführungsform, bei der die feste End-Relativposition und/oder die feste Start-Relativposition einstellbar ist, insbesondere durch Verstellen eines entsprechenden, die jeweilige Relativposition definierenden Anschlags.

Besonders bevorzugt ist eine Ausführungsform des Verfahrens und der Vorrichtung, bei welchen die Hülse, bevorzugt jedoch nicht zwingend, gemeinsam mit dem Dorn relativ zu der Matrize verstellt wird, bis das axial über die Hülse, genauer den Außenumfang der Hülse in Richtung der Matrize vorstehende Tubenrohr zwischen Matrize und Hülse geklemmt wird, woraufhin, bevorzugt ausschließlich, Dorn und Matrize zur Druckbeaufschlagung der Kunststoffportion (weiter) aufeinander zu verstellt werden und in der Folge die Hülse von der Start-Relativposition in die End-Relativposition verstellt wird, wobei für einen Teil dieser Relativverstellbewegung die axiale Verstellung der Hülse von der Matrize weg verantwortlich ist, die erfindungsgemäß aus der Druckbeaufschlagung der Hülse von der Kunststoffportion resultiert.

Ganz besonders bevorzugt ist eine Ausführungsform des erfindungsgemäßen Verfahrens und der erfindungsgemäßen Vorrichtung, bei der die Hülse, zumindest während eines anfänglichen Zeitabschnitts während eines Entformungsvorgangs in der End-Relativposition relativ zum Dorn gehalten wird, um auf ein axiales Zurückverstellen der Hülse in Richtung Matrize und dadurch ggf. Beschädigen des frisch geformten bzw. gepressten Tubenkopfes zu vermeiden. Hierfür gibt es unterschiedliche Möglichkeiten. So ist es denkbar, vor einem Start des Entformungsvorgangs die auf die Hülse wirkende Gegenkraft, bevorzugt auf Null zu reduzieren, beispielsweise durch eine entsprechende Ansteuerung eines Kolbenzylinderantriebs, insbesondere eines doppelwirkenden Kolbenzylinderantriebs und/oder indem die Hülse von der Matrize weg axial in Richtung End-Relativposition kraftbeaufschlagt wird, was besonders bevorzugt durch den erwähnten, fakultativen doppelt wirkenden Kolbenzylinderantrieb realisiert ist. Auch besteht die Möglichkeit die Hülse und/oder die Kraftbeaufschlagungsmittel zur Erzeugung der Gegenkraft in der End-Relativposition relativ zum Dorn zu arretieren, um somit eine ungewollte Zurückverstellung zumindest in einer Anfangsphase des Entformungsvorgangs zu vermeiden.

Bevorzugt verbleibt die Hülse zumindest so lange in der zweiten Endposition, bis Hülse und Tubenkopf zumindest über die Strecke entlang der Pressachse voneinander beabstandet sind, die die Hülse durch die Druckbeaufschlagung der Kunststoffportion während des Pressvorgangs von der Hülse wegverstellt wird.

Im Hinblick auf die relative Positionierung (oben/unten) von Dorn und Matrize gibt es zwei unterschiedliche Möglichkeiten. Gemäß einer ersten Ausführungsform ist der Dorn entlang der, bevorzugt mit der Vertikalen zusammenfallenden Pressachse unterhalb der Matrize angeordnet und wird vor dem Verpressen der Kunststoffportion mit der Kunststoffportion beladen. Bei der alternativen Ausführungsform ist vorgesehen, dass die Matrize entlang der, bevorzugt mit der vertikalen zusammenfallenden Pressachse unterhalb des Dorns angeordnet ist und entweder unmittelbar die Matrize oder (zunächst) ein relativ zu der Matrize entlang der Pressachse ausfahrbarer, in der ausgefahrenen Position die Matrize durchsetzender und bevorzugt in der eingefahrenen Position ein Formabschnitt der Matrize bildender Zwischenträger mit der Kunststoffportion beladen wird. Das Vorsehen dieses, beispielsweise in der DE 88 01 851 U beschriebenen Zwischenträgers hat den Vorteil einer geringfügigeren Abkühlung der Kunststoffportion zur Vermeidung entsprechender negativer Oberflächeneinflüsse.

Grundsätzlich ist es möglich, die Hülse mit dem Tubenrohr bei in der Start-Relativposition befindlicher Hülse zu beladen, in dem das Tubenrohr axial auf die Hülse aufgesteckt wird. Eine erleichterte Beladung ist jedoch möglich und bevorzugt, wenn sich die Hülse in der festen End-Relativposition befindet und die Hülse aktiv mittels eines entsprechenden Hülsenantriebs während oder vor der Relativbewegung der Hülse auf die Matrize zu, d.h. vor dem mittelbaren Anschlagen der Hülse an der Matrize über das Tubenrohr in die Start-Relativposition verstellt wird.

Ganz besonders bevorzugt erfolgt das aktive Antreiben der Hülse in die zweite End-Relativposition noch vor dem Beladen einer Pressformkomponente, d.h. vor dem Beladen des Dorns, der Matrize oder eines Zwischenträgers mit der, bevorzugt ringförmigen, insbesondere donutförmigen Kunststoffportion.

Im Hinblick auf die Art und Weise der Bereitstellung bzw. Erzeugung der Gegenkraft die zum Verstellen der Hülse von der Matrize weg überwunden werden muss, gibt es unterschiedliche Möglichkeiten. Grundsätzlich ist es realisierbar, die Hülse mit einer, insbesondere mechanischen Feder, einer Gasdruckfeder oder einer hydraulischen Feder axial entlang der Pressachse in Richtung Matrize, insbesondere gegen einen die Start-Relativposition definierenden Anschlag mit der Gegenkraft zu beaufschlagen. Ganz besonders bevorzugt ist es, die Gegenkraft mittels eines, bevorzugt pneumatischen oder hydraulischen, bevorzugt linearen, Hülsenverstellantrieb bereitzustellen, insbesondere mit einem Kolben-Zylinder-Antrieb, der die Hülse mit der Gegenkraft, insbesondere gegen einen vorerwähnten, die Start-Relativposition definierten Anschlag kraftbeaufschlagt. Als besonders zweckmäßig hat es sich herausgestellt, die Gegenkraft mittels eines doppelt wirkenden Kolben-Zylinder-Antriebs zu erzeugen, mit welchem die Hülse antreibbar ist zwischen der Start-Relativposition und der End-Relativposition, beispielsweise nach einem Beladen der Hülse mit dem Tubenrohr. Derartige, insbesondere pneumatische oder hydraulische Hülsenverstellantriebe haben ebenfalls eine gewisse Federwirkung. Insbesondere bevorzugt ist der Einsatz des erwähnten doppelt wirkenden Kolben-Zylinder-Antriebs, da mit diesem die Hülse vor dem Entformen in Richtung der End-Relativposition kraftbeaufschlagbar ist, um somit eine Verstellbewegung der Hülse bzw. eine Gegenkraftbeaufschlagung des frisch erzeugten Tubenkopfes während der Entformung zu vermeiden. Eine ungewollte Gegenkraftbeaufschlagung des Tubenkopfes während es Entformungsvorgangs kann jedoch auch bei einer mechanischen Feder oder einer Gasdruckfeder oder einer hydraulischen Feder realisiert werden, indem diese Feder blockiert bzw. arretiert wird. Auch ist bei Einsatz eines einfachen Kolben-Zylinder-Antriebs die Gegenkraft durch entsprechendes Absenken des Kolbendrucks reduzierbar, insbesondere bis auf Null.

Besonders zweckmäßig ist es, wenn die auf die Hülse wirkende Gegenkraft, insbesondere die Federkraft so eingestellt oder gewählt ist, dass die Hülse bei 10% bis 90%, bevorzugt zwischen 30% und 70% des maximal auf die Kunststoffportion während des Pressvorgangs wirkenden Drucks in die feste End-Relativposition verstellt wird.

Bevorzugt ist eine Ausführungsform des Verfahrens und der Vorrichtung, bei der im Falle eines aktiv entlang der Pressachse verstellbaren bzw. antreibbaren Dorns die Matrize federnd gelagert ist derart, dass die Matrize gegen Ende des Pressvorgangs, insbesondere nach dem Verstellen der Hülse in die End-Relativposition durch Verstellen des Dorns, insbesondere gemeinsam mit der Hülse weiter auf die Matrize zu entgegen der Federkraft einer entsprechenden Feder verstellbar ist. Diese Federkraft definiert dabei dann den maximal auf die Kunststoffportion wirkenden Druck. Bevorzugt ist der Verstellweg, den die Matrize am Ende des Pressvorgangs entgegen der Federkraft verstellt wird auf einen Wert aus einem Wertebereich zwischen 0,1 mm und 1 mm, bevorzugt zwischen 0,2mm und 0,8mm, ganz besonders bevorzugt zwischen 0,4mm und 0,6mm beschränkt. Bei der alternativen Ausführungsform, bei der die Matrize aktiv in Richtung Dorneinheit antreibbar ist, ist es bevorzugt, die Dorneinheit federnd zu lagern, um die maximale, auf die Kunststoffportion wirkende Druckkraft zu begrenzen. Der Verstellweg ist dabei bevorzugt aus dem o.g. Wertebereich gewählt.

Die Erfindung führt auch auf eine Vorrichtung, die bevorzugt ausgebildet ist, zur Durchführung eines nach dem Konzept der Erfindung ausgebildeten Verfahrens. Die Vorrichtung weist hierzu entsprechende Funktionsmittel auf. Wesentlich ist, dass die Hülse mithilfe von Kraftbeaufschlagungsmitteln, insbesondere Federmitteln, ganz besonders bevorzugt einem Kolbenzylinderantrieb, noch weiter bevorzugt einem doppeltwirkenden Kolbenzylinderantrieb mit einer Gegenkraft entlang der Pressachse in Richtung der Matrize, bevorzugt gegen eine Start-Relativposition der Hülse relativ zum Dorn definierenden Anschlag beaufschlagbar ist, wobei die Gegenkraft so dimensioniert ist, dass die Hülse durch die Druckbeaufschlagung der Kunststoffportion vor Beendigung des Pressvorgangs axial entlang der Pressachse entgegen der Gegenkraft relativ zu der Matrize von dieser Weg sowie relativ zum Dorn in eine feste End-Relativposition zum Dorn verstellbar ist. Diese feste End-Relativposition ist bevorzugt von einem fest relativ zum Dorn angeordneten Anschlag definiert.

Im Hinblick auf Möglichkeiten der Ausgestaltung der Kraftbeaufschlagungsmittel, insbesondere in Form von Federkraftbeaufschlagungsmitteln wird auf die vorhergehende Beschreibung verwiesen. Denkbar ist, wie ebenfalls bereits erwähnt, auch der Einsatz einer mechanischen Feder, beispielsweise einer Schraubenfeder, welche bevorzugt verriegelbar ist.

Unabhängig von der konkreten Ausgestaltung der Kraftbeaufschlagungsmittel, insbesondere in Form eines, bevorzugt doppelt wirkenden Kolben-Zylinder-Antriebs, ist es bevorzugt, wenn diese in eine austauschbares, die Dorneinheit umfassendes Werkzeugmodul integriert sind. Für den bevorzugten Fall, dass die Vorrichtung zur Aufnahme des Werkzeugmoduls Antriebsmittel zum aktiven Antreiben (Verstellen) der Dorneinheit entlang der Pressachse relativ zur Matrize aufweist, ist es bevorzugt, wenn das Werkzeugmodul mit diesen vorrichtungsfesten Antriebsmitteln verbindbar ist, derart, dass mit den Antriebsmitteln die Kraftbeaufschlagungsmittel gemeinsam mit der Dorneinheit entlang der Pressachse antreibbar bzw. verstellbar sind, wobei die Hülse relativ zum Dorn gegen eine von den Kraftbeaufschlagungsmitteln aufbringbare Gegenkraft während eines Pressvorgangs verstellbar ist.

Weitere Vorteile, Merkmale und Einzelheiten der Erfindung ergeben sich aus der nachfolgenden Beschreibung eines bevorzugten Ausführungsbeispiels sowie anhand der Zeichnungen.

Diese zeigen in:

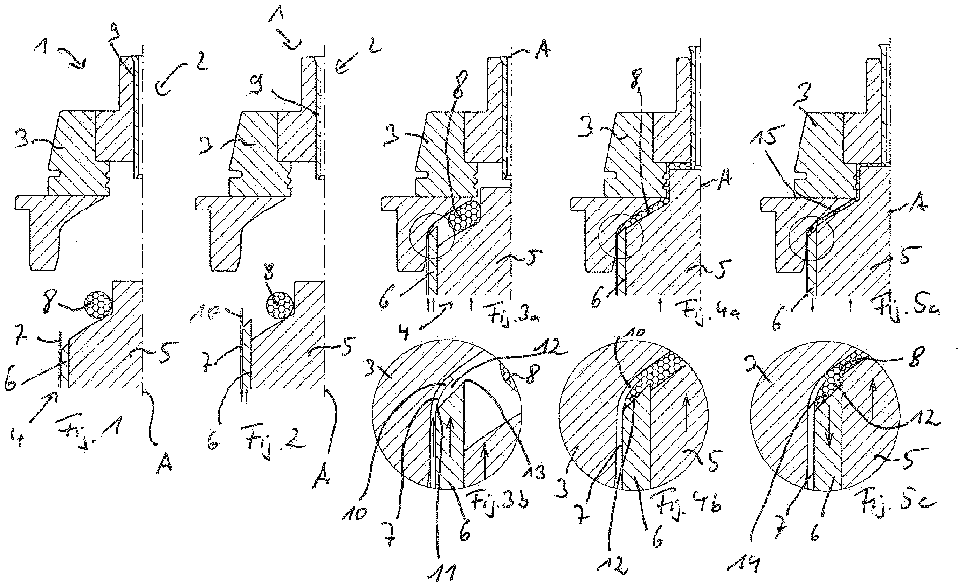

- Fig. 1 bis Fig. 5c: unterschiedliche Zustände einer Pressform einer Vorrichtung zum Herstellen von Verpackungstuben während eines Pressvorgangs zum Herstellen bzw. Formen und Verbinden eines Tubenkopfes mit einem Tubenrohr.

In den Figuren sind gleiche Elemente und Elemente mit der gleichen Funktion mit den gleichen Bezugszeichen gekennzeichnet.

In dem im Folgenden erläuterten Ausführungsbeispiel wird beispielhaft ein Dorn 5 mit der Kunststoffportion beladen. Insbesondere bei vertikal gespiegelter bzw. um 180° gedrehter Anordnung von Dorn 5 und Matrize 3 ist alternativ denkbar unmittelbar die Matrize 3 oder einen dann vorsehbaren, relativ zur Matrize 3 verstellbaren Zwischenträger mit der Kunststoffportion zu beladen.

In den Fig. 1 bis 5c ist ausschnittsweise eine zur Ausführung eines erfindungsgemäßen Verfahrens, nach dem Konzept der Erfindung ausgebildete Vorrichtung 1 zum Herstellen von vollständig oder überwiegend aus Kunststoff bestehenden Verpackungstuben gezeigt, wobei in den Fig. 3b, 4b, 5c jeweils Detailvergrößerungen aus den zugehörigen Fig. 3a bzw. 4a bzw. 5a dargestellt sind.

In Fig. 1 ist eine Pressform 2 gezeigt, umfassend eine (wannenartige), hier vorliegend mehrteilige Matrize 3 die entlang einer mit der vertikalen zusammenfallenden Pressachse A oberhalb einer Dorneinheit 4 angeordnet ist, umfassend einen zentrischen Dorn 5 sowie eine am Außenumfang des Dorns 5 angeordnete, relativ zu dem Dorn 5 entlang der Pressachse A verstellbare Hülse 6.

Am Außenumfang der Hülse 6 befindet sich ein die Hülse 6 axial entlang der Pressachse in Richtung Matrize 3 überragendes Tubenrohr 7, welches in einem vorgelagerten Schritt auf die Hülse 6 aufgeladen wurde und zwar bevorzugt in der gezeigten, festen End-Relativposition der Hülse 6 entlang der Pressachse A relativ zum Dorn 5. Ebenso wurde der Dorn 5 in an sich bekannter Weise in einem vorgelagerten Verfahrensschritt, bei welchem sich der Dorn 5 noch nicht unterhalb der Matrize 3 befand, mit einer ringförmigen, extrudierten, plastifizierten, thermoplastischen Kunststoffportion 8 beladen.

Wie sich aus Fig. 2 ergibt, wird nach dem Beladen der Hülse 6 mit dem hohlzylindrischen Tubenrohr 7 die Hülse 6 (zusammen mit dem darauf angeordneten Tubenrohr 7) axial entlang der Pressachse, vorliegend nach oben, in eine in Fig. 2 gezeigte Start-Relativposition der Hülse 6 entlang der Pressachse A relativ zum Dorn 5 verstellt. Grundsätzlich ist es auch möglich, diese Relativverstellbewegung vor dem Beladen mit der Kunststoffportion 8 durchzuführen und/oder die Hülse 6 in der festen End-Relativposition zu beladen (vorzugsweise dann bei noch nicht darüber befindlicher Matrize 3).

Zu erkennen ist in den Figuren, dass sich entlang der Pressachse A gegenüber dem Dorn 5 ein Lochstempel 9 befindet, der bei der folgenden Relativbewegung von Dorn 5 und Matrize 3 aufeinander zu stirnseitig am Dorn 5 anschlägt und somit eine Durchgangsöffnung im Tubenkopfhals in an sich bekannter Weise sicherstellt.

Aus Fig. 2 ist zu entnehmen, dass das Tubenrohr 7 entlang der Pressachse mit einem Überstandsabschnitt 10 in Richtung Matrize über die Hülse 6 vorsteht. Die Hülse 6 wiederum steht in der festen Endposition über den Außenumfang des Dorns 5 in Richtung Matrize vor, während die Hülse 6 in der in Fig. 1 gezeigten festen Start-Relativposition axial gegenüber der Stirnseite des Dorns 5 zurückversetzt ist oder alternativ bündig mit dieser abschließt.

In den Fig. 3a und 3b ist eine Relativposition zwischen Dorn 5 und Matrize 3 gezeigt, die daher rührt, dass Matrize 3 und Dorn 5 entlang der Pressachse A aufeinander zu verstellt wurden, vorliegend durch gemeinsames Antreiben der Dorneinheit 4 in Richtung der feststehenden Matrize mit gemeinsamen, nicht gezeigten Antriebsmitteln, beispielsweise umfassend einen Kurzhebelantrieb. Die gezeigte Relativposition ist dadurch gekennzeichnet, dass in der Position das Tubenrohr 7, genauer der Überstandsabschnitt 10 durch entsprechende Formgebung der Matrize 3 leicht nach radial innen gebogen ist und im Bereich einer radial äußeren Stirnseitenkante 11 der Hülse 6 geklemmt ist zwischen der Hülse 6 und der Matrize 3 - anders ausgedrückt schlägt in der gezeigten Situation die Hülse 6 axial mittelbar über das Tubenrohr 7 an der Matrize an, sodass eine Weiterbewegung der Hülse 6 entlang der Pressachse A in Richtung Matrize 3, d.h. vorliegend nach oben blockiert wird. Die gemeinsamen Antriebsmittel für die Dorneinheit 4 sorgen jedoch dafür, dass, wie aus den Fig. 4a und 4b ersichtlich ist, der Dorn 5 nun axial entlang der Pressachse A in Richtung Matrize 3 weiterverstellt wird bei feststehender Hülse 6. Zu erkennen ist in den Fig. 3a und 3b, dass in dem Klemmzustand die Kunststoffportion 8 nur minimal gepresst wurde zwischen Dorn 5 und Matrize 3 jedenfalls nur soweit, dass sich die Kunststoffportion nicht in einen Bereich 12 axial zwischen Hülse 6 und Dorn 5 hinein ausbreitet. Aus Fig. 3b ist ersichtlich, dass in der gezeigten Anschlagsposition ein geringer Einlauf bzw. Radialspalt 13 radial innen zwischen Hülse 6 und Matrize 3 offengehalten bzw. freigehalten ist, um, wie später noch erläutert werden wird, ein Hineinverdrängen der Kunststoffportion 8 in den Bereich 12 bei einem weiteren Verpressen der Kunststoffportion 8 zu ermöglichen.

Wie erwähnt, verbleibt die Hülse 6 zunächst in der in Fig. 3a und 3b gezeigten Relativposition bzw. Anschlagsposition relativ zur Matrize 3 und der Dorn 5 wird mit den gemeinsamen Antriebsmitteln weiter in Richtung Matrize verstellt, wodurch die Kunststoffportion 8 weiter mit einer Druck- bzw. Presskraft beaufschlagt wird und sich in der gesamten Pressform verteilt, auch in den vorerwähnten Bereich 12 hinein (vgl. Fig. 4b) und somit auch bereits gelangt in einen Bereich zwischen den Überstandsabschnitt 10 der Hülse 6 und der der Matrize 3 zugewandten Stirnseite der Hülse 6. Bei einer Weiterbewegung des Dorns 5 entlang der Pressachse A in die Matrize 3 hinein steigt der von der Kunststoffportion auf die Hülse 6 im Bereich 12 aufgebrachte Druckkraft in eine Richtung entlang der Pressachse A von der Matrize weg, sodass sich die Hülse 6, wie aus den Fig. 5a und 5c ersichtlich ist, zu bewegen beginnt entlang der Pressachse A von der Matrize weg sowie relativ zum Dorn 5 und zwar bis in die in Fig. 1 gezeigte feste End-Relativposition zum Dorn 5 hinein. Der Verstellweg der Hülse 6 von der Matrize 3 weg beträgt in dem gezeigten Ausführungsbeispiel wenige Millimeter. Es wird jedoch ein so großer Pressformabschnitt 14 von der Hülse 6 freigegeben, dass dieser in dem gezeigten Ausführungsbeispiel etwa 6% der Gesamtmasse der Kunststoffportion 8 aufnehmen kann. Sobald die feste Endposition der Hülse 6 relativ zum Dorn erreicht ist, nimmt der Dorn 5 über den die feste End-Relativposition der Hülse 6 definierenden Anschlag die Hülse 6 mit in entlang der Pressachse A in Richtung Matrize 3 bzw. in diese hinein, ohne dabei die feste End-Relativposition zwischen Hülse 6 und Dorn 5 zu verändern. Am Ende dieses Bewegungsschrittes steigt der Druck in der Kunststoffportion 8 so stark an, dass die Matrize 3 in eine nicht gezeigte Feder entlang der Pressachse A hinein, vorliegend nach oben verstellt wird, wobei die Federkraft dieser Feder die maximale Presskraft definiert. Dieser gemeinsame Verstellweg von Dorneinheit 4 und Matrize 3 entgegen der Federkraft beträgt in dem vorliegenden Ausführungsbeispiel etwa nur 0,5mm.

In dieser Position verharrt die Vorrichtung nun, bis eine ausreichende Abkühlung und damit Auskühlung des frisch hergestellten Tubenkopfes 15 erreicht wurde, der im Bereich 12 mit dem Tubenrohr 7 verbunden wurde. Nach dieser Abkühlphase wird die Dorneinheit 4 wieder von den gemeinsamen Antriebsmitteln von der Matrize 3 entlang der Pressachse A wegverstellt, wobei sichergestellt ist, dass die Hülse 6 gemeinsam mit dem Dorn 5 von der Matrize 3 wegverstellt wird und der Tubenkopf 15 während dieses Entformungsvorgangs nicht (mehr) mit der Gegenkraft beaufschlagt wird. In dem gezeigten Ausführungsbeispiel ist hierfür der Hülse 6 ein doppelt wirkender Kolbenzylinderantrieb zugeordnet, dessen Kolben in der Start-Relativposition und der End-Relativposition aneinander gegenüberliegende Zylinderböden anschlägt. Durch Füllen einer der Kammern, vorliegend beispielsweise einer unteren Kammer, wird die Hülse 6 zunächst mit der Gegenkraft beaufschlagt. Vor dem Entformungsvorgang werden die Zylinderräume dann umgeschaltet und die Hülse 6 wird von der Matrize 3 weg in die feste End-Relativposition kraftbeaufschlagt. Wie im allgemeinen Beschreibungsteil erwähnt, sind andere Möglichkeiten zur Gegenkraftbeaufschlagung und/oder Vermeidung einer Kraftbeaufschlagung des Tubenkopfes 15 durch die Hülse 6 beim Entformungsvorgang gegeben.

Vielfältige Modifikationen des erläuterten Ausführungsbeispiels sind, insbesondere im Rahmen des allgemeinen Offenbarungsteils möglich - die Erfindung ist nicht auf das konkrete Ausführungsbeispiel beschränkt. Wie erwähnt sieht eine alternative Möglichkeit vor, nicht die Dorneinheit 4 als Gesamteinheit aktiv relativ zu der Matrize 3 zu verstellen, sondern stattdessen für den Pressvorgang die Matrize 3 relativ zu der Dorneinheit 4, wobei auch bei dieser Ausführungsform die Dorneinheit 4 eine relativ zum Dorn 5 zwischen der Start-Relativposition und der End-Relativposition verstellbare Hülse 6 vorsieht.

### Bezugszeichenliste

- 1: Vorrichtung
- 2: Pressform
- 3: Matrize
- 4: Dorneinheit
- 5: Dorn
- 6: Hülse
- 7: Tubenrohr
- 8: Kunststoffportion
- 9: Lochstempel
- 10: Überstandsabschnitt des Tubenrohrs
- 11: Stirnseitenkante der Hülse
- 12: Bereich
- 13: Spalt (Einlassspalt)
- 14: Pressformabschnitt
- 15: Tubenkopf

- A: Pressachse

## Patentansprüche

1. Verfahren zum Herstellen von Verpackungstuben bei dem mit einer eine Matrize (3) sowie eine einen Dorn (5) und eine den Dorn (5) umgebende Hülse (6) aufweisenden Dorneinheit (4) umfassenden Pressform (2) durch Pressen einer plastifizierten, thermoplastischen, bevorzugt extrudierten, Kunststoffportion (8) zwischen der Matrize (3) und der Dorneinheit (4) ein Tubenkopf (15) geformt und mit einem am Außenumfang der Hülse (6) angeordneten Tubenrohr (7) verbunden wird, wobei während des Pressens der Dorn (5) und die Matrize (3) entlang einer Pressachse (A) aufeinander zu verstellt und dadurch die Kunststoffportion (8) mit Druck beaufschlagt wird,
**dadurch gekennzeichnet,**
**dass** die Hülse (6) durch die Druckbeaufschlagung der Kunststoffportion (8) vor Beendigung des Pressvorgangs axial entlang der Pressachse (A) entgegen einer Gegenkraft relativ zu der Matrize (3) von dieser weg sowie relativ zum Dorn (5) in eine feste End-Relativposition zum Dorn (5) verstellt wird.

2. Verfahren nach Anspruch 1,
**dadurch gekennzeichnet,**
**dass** in einen durch das Verstellen der Hülse (6) in die feste End-Relativposition freiwerdenden und von einem zuvor von der Hülse (6) verdeckten Innenumfangswandabschnitt des Tubenrohres (7) radial außen begrenzten Pressformabschnitt ein Teil der Kunststoffportion (8) hinein verdrängt wird, insbesondere zwischen 0,4Gew.-% und Gew.-30%, bevorzugt zwischen 0,8Gew.-% und 25Gew.-%, noch weiter bevorzugt zwischen 1,2Gew.-% und 20Gew.-%, ganz besonders bevorzugt zwischen 1,5Gew.-% und 15Gew.-% der Gesamtmasse der Kunststoffportion (8).

3. Verfahren nach einem der vorhergehenden Ansprüche,
**dadurch gekennzeichnet,**
**dass** die Hülse (6) zum Zeitpunkt des Klemmens des Tubenrohres (7) zwischen Hülse (6) und Matrize (3) in einer, bevorzugt festen, Start-Relativposition zum Dorn (5) angeordnet ist.

4. Verfahren nach einem der vorhergehenden Ansprüche,
**dadurch gekennzeichnet,**
**dass** die Start-Relativposition und/oder End-Relativposition durch jeweils einen Anschlag definiert werden.

5. Verfahren nach einem der Ansprüche 3 oder 4,
**dadurch gekennzeichnet,**
**dass** die Hülse (6), bevorzugt gemeinsam mit dem Dorn (5), relativ zur Matrize (3) verstellt wird bis das axial über die Hülse (6) in Richtung der Matrize (3) vorstehende Tubenrohr (7) zwischen Matrize (3) und Hülse (6) geklemmt wird, woraufhin Dorn (5) und Matrize (3) bei feststehender Hülse (6) zur Druckbeaufschlagung der Kunststoffportion (8) aufeinander zu verstellt werden und in der Folge die Hülse (6) von der Start-Relativposition in die End-Relativposition verstellt wird.

6. Verfahren nach einem der vorhergehenden Ansprüchen,
**dadurch gekennzeichnet,**
**dass** nach dem durch das Druckbeaufschlagen der Kunststoffportion (8) bewirkten Verstellen der Hülse (6) in die feste End-Relativposition, insbesondere nach einer daran anschließenden Abkühlphase des geformten Tubenkopfes (15), die Hülse (6) in der festen End-Relativposition verbleibt, insbesondere in dem die Gegenkraft, bevorzugt auf null, reduziert und/oder die Hülse (6) von der Matrize (3) weg axial in Richtung der End-Relativposition kraftbeaufschlagt und/oder die Hülse (6), bevorzugt in der End-Relativposition, arretiert wird und dass daraufhin die Matrize (3) und die Dorneinheit (4) bei in der festen End-Relativposition verbleibender Hülse (6) entlang der Pressachse (A) zum Entformen voneinander weg verstellt werden.

7. Verfahren nach einem der vorhergehenden Ansprüche,
**dadurch gekennzeichnet,**
**dass** der Dorn (5) entlang der, bevorzugt mit der Vertikalen zusammenfallenden, Pressachse (A) unterhalb der Matrize (3) angeordnet ist und vor dem Verpressen der Kunststoffportion (8) mit der Kunststoffportion (8) beladen wird, oder dass die Matrize (3) entlang der, bevorzugt mit der Vertikalen zusammenfallenden, Pressachse (A) unterhalb des Dorns (5) angeordnet ist und die Matrize (3) oder ein relativ zu der Matrize (3) entlang der Pressachse (A) ausfahrbarer, in der ausgefahrenen Position die Matrize (3) durchsetzender und bevorzugt in der eingefahrenen Position einen Formabschnitt der Matrize (3) bildender Zwischenträger mit der Kunststoffportion (8) beladen wird.

8. Verfahren nach einem der vorhergehenden Ansprüche,
**dadurch gekennzeichnet,**
**dass** die Hülse (6) in der End-Relativposition mit dem Tubenrohr (7) beladen wird und die Hülse (6) vor einem Klemmen des Tubenrohres (7) zwischen Hülse (6) und Matrize (3), insbesondere vor dem Beladen einer Pressformkomponente, insbesondere des Dorns (5), der Matrize (3) oder eines Zwischenträgers, mit der, bevorzugt ringförmigen, Kunststoffportion (8) aktiv in die feste End-Relativposition angetrieben wird.

9. Verfahren nach einem der vorhergehenden Ansprüche,
**dadurch gekennzeichnet,**
**dass** die Gegenkraft von einer Feder, insbesondere einer mechanischen Feder, einer Gasdruckfeder oder einer hydraulischen Feder bereitgestellt wird und/oder mittels eines, bevorzugt pneumatischen oder hydraulischen, Hülsenverstellantriebs, insbesondere sondere eines Kolben-Zylinder-Antriebs, insbesondere mittels eines doppelt wirkenden Kolben-Zylinder-Antriebs, zum aktiven Relativverstellen der Hülse (6) zwischen der Start-Relativposition und der End-Relativposition.

10. Verfahren nach einem der vorhergehenden Ansprüche,
**dadurch gekennzeichnet,**
**dass** die Gegenkraft, insbesondere die Federkraft, so eingestellt oder gewählt ist, dass die Hülse (6) bei 10% bis 90%, bevorzugt zwischen 30% und 70% des maximal auf die Kunststoffportion (8) während des Pressvorgangs wirkenden Drucks in die feste End-Relativposition verstellt wird.

11. Verfahren nach einem der vorhergehenden Ansprüche,
**dadurch gekennzeichnet,**
**dass** bei aktiv entlang der Pressachse (A) verstellbarem Dorn (5) die Matrize (3) federnd gelagert ist und die Matrize (3) gegen Ende des Pressvorgangs, insbesondere während oder nach dem Verstellen der Hülse (6) von in die End-Relativposition entgegen der Federkraft entlang der Pressachse (A) verstellt wird oder dass bei aktiv entlang der Pressachse (A) verstellbarer Matrize (3) die Dorneinheit (4) federnd gelagert ist und der Dorn (5) gegen Ende des Pressvorgangs, insbesondere während oder nach dem Verstellen der Hülse (6) in die feste End-Relativposition entgegen der Federkraft entlang der Pressachse (A) verstellt wird.

12. Vorrichtung zum Herstellen von Verpackungstuben, insbesondere im Rahmen eines Verfahrens nach einem der vorhergehenden Ansprüche, mit einer eine Matrize (3) sowie eine einen Dorn (5) und eine den Dorn (5) umgebende Hülse (6) aufweisenden Dorneinheit (4) umfassenden Pressform (2) zum Formen einer plastifizierten, thermoplastischen, bevorzugt extrudierten, Kunststoffportion (8) zwischen der Matrize (3) und der Dorneinheit (4) zu einem Tubenkopf (15) und zum Verbinden des Tubenkopfes (15) mit einem am Außenumfang der Hülse (6) anordnenbaren Tubenrohr (7), wobei der Dorn (5) und die Matrize (3) derart angeordnet sind, dass diese während des Pressens der Kunststoffportion (8) mittels Antriebsmitteln entlang einer Pressachse (A) aufeinander zu verstellbar und dadurch die Kunststoffportion (8) mit Druck beaufschlagbar ist,
**dadurch gekennzeichnet,**
**dass** die Hülse (6) mit Hilfe von Kraftbeaufschlagungsmitteln mit einer Gegenkraft entlang der Pressachse (A) in Richtung der Matrize (3) beaufschlagbar ist, die so dimensioniert ist, dass die Hülse (6) durch die Druckbeaufschlagung der Kunststoffportion (8) vor Beendigung des Pressvorgangs axial entlang der Pressachse (A) entgegen der Gegenkraft relativ zu der Matrize (3) von dieser weg sowie relativ zum Dorn (5) in eine feste End-Relativposition zum Dorn (5) verstellbar ist.

13. Vorrichtung nach Anspruch 12,
**dadurch gekennzeichnet,**
**dass** die Kraftbeaufschlagungsmittel als Federkraftbeaufschlagungsmittel, insbesondere als pneumatische oder hydraulische Federkraftbeaufschlagungsmittel ausgebildet sind.

14. Vorrichtung nach Anspruch 13,
**dadurch gekennzeichnet,**
**dass** die Federkraftbeaufschlagungsmittel in der End-Relativposition der Hülse (6) blockierbar oder die Kraftrichtung umkehrbar ist, insbesondere in dem die Kraftbeaufschlagungsmittel einen, insbesondere doppelt wirkenden, Kolben-Zylinder-Antrieb umfassen.

15. Vorrichtung nach einem der Ansprüche 12 bis 14,
**dadurch gekennzeichnet,**
**dass** die Kraftbeaufschlagungsmittel in ein austauschbares, die Dorneinheit (4) umfassendes Werkzeugmodul integriert sind, dass vorzugsweise derart lösbar mit den Antriebsmitteln verbindbar ist, dass mit diesen die Kraftbeaufschlagungsmittel gemeinsam mit der Dorneinheit (4) entlang der Pressachse (A) antreibbar ist.
